# EUROPÄISCHE PATENTSCHRIFT

(11) **EP 0 870 386 B1**
(45) Veröffentlichungstag und Bekanntmachung des Hinweises auf die Patenterteilung: **12.04.2000**
(21) Anmeldenummer: 96946223.3
(22) Anmeldetag: 20.12.1996
(51) Int. Cl.: H04L 12/58, H04M 11/06

(54) **VERFAHREN UND MIKROCOMPUTERSYSTEM ZUR AUTOMATISCHEN, SICHEREN UND DIREKTEN DATENÜBERTRAGUNG**
METHOD AND MICROCOMPUTER SYSTEM FOR THE AUTOMATIC, SECURE AND DIRECT TRANSMISSION OF DATA
PROCEDE ET SYSTEME MICRO-INFORMATIQUE POUR LA TRANSMISSION AUTOMATIQUE, SURE ET DIRECTE DE DONNEES

(30) Priorität: 29.12.1995 DE 19549307
(43) Veröffentlichungstag der Anmeldung: 14.10.1998
(73) Patentinhaber: Tixi.Com GmbH Telecommunication, 13465 Berlin (DE)
(72) Erfinder: BRABAND, Martin, D-13465 Berlin (DE)
(74) Vertreter: Ninnemann, Detlef, Dipl.-Ing.
(86) Internationale Anmeldenummer: DE9602489
(87) Internationale Veröffentlichungsnummer: WO9724825

(56) Entgegenhaltungen:
- EP-A- 0 413 537
- WO-A-90/14726
- WO-A-93/20647
- US-A- 5 379 340
- ELECTRONICS & WIRELESS WORLD, Bd. 91, Nr. 1594, August 1985, SURREY GB, Seiten 33-38, XP002033518 M. ALLARD ET AL.: "Electronic Mailbox"
- PATENT ABSTRACTS OF JAPAN vol. 016, no. 254 (E-1213), 9.Juni 1992 & JP 04 054756 A (NIPPON TELEGR & TELEPH CORP), 21.Februar 1992,

## Beschreibung

Die Erfindung betrifft ein Verfahren und ein Mikrocomputersystem zur automatischen, sicheren und direkten Datenübertragung.

In steigendem Maße werden heute Informationen zwischen Computern (z.B. PC) von Endnutzern ausgetauscht. Dabei steht traditionell die Übertragung reiner Textinformationen als "electronic mail" (d.h. elektronischer Post) im Vordergrund. Mittlerweile werden z.B. auch Fax-, Ton-, Bild-, Videodaten oder sonstige Computerdaten wie Programme, Daten aus Datenbanken, Meßdaten u.v.a. zwischen Computern ausgetauscht, so daß im folgenden unter "elektronischer Post" der Austausch von Daten zwischen Computern in jeglicher Form verstanden wird.

Nachteilig ist dabei, daß im Gegensatz zum Telefax- oder Telefonverkehr eine direkte Zustellung von elektronischer Post an den Nutzer eines Endgerätes (z.B. Nutzer eines PC über das Internet) nur mit großem Aufwand möglich ist. So ist eine direkte und automatische Datenübertragung zwischen einem Sender-Endgerät und einem Empfänger-Endgerät sehr umständlich, da beide Endgeräte oder ein Zentralrechner als Zwischenspeicher eingeschaltet sein müssen, und bestimmte Programme zur Steuerung des Datenaustauschs auf den eingeschalteten Computern laufen müssen.

Das bedeutet, daß Zentralrechner aus Sicherheitsgründen (z.B. Datensicherheit, Sicherheit gegenüber Systemversagen) meist keine anderen Aufgaben übernehmen können und Tag und Nacht laufen müssen. Solche "immer bereiten" Systeme werden heute meist firmenintern zwischen Datenverarbeitungsnetzen an verschiedenen Firmenstandorten (sog. Router oder Mailserver) oder zum Anschluß von Endgeräten an ein weltweites Netz, wie z.B. dem Internet eingesetzt.

Bei der elektronischen Post ist man heute z.B. auf sogenannte "Service Provider" angewiesen, die ständig betriebsbereite "Relaisstationen" für die Übertragung von elektronischer Post zur Verfügung stellen.

Elektronische Post wird bei den bekannten Verfahren über ein "Senderpostamt" und ein weltweites Netz von Computer-Zwischenstationen bis zu einem "Empfängerpostamt" versandt, das im Gegensatz zum eigentlichen Endgerät des Empfängers, ständig in Betrieb ist. Auch befinden sich die Postämter nicht im unmittelbaren Einflußbereich der Endnutzer. Bei diesem Postamt liegt die elektronische Post bis der Empfänger, der an einem Endgerät sitzt, sie abholt, wobei der Empfänger entweder regelmäßig beim Postamt nachfragen muß oder er selbst Maßnahmen einleitet. Obwohl die eigentliche Übertragung von elektronischer Post nur Sekunden dauert, kann dringende Post heute nicht auf diesem Wege verschickt werden, da der Sender nicht weiß, ob und wann der eigentliche Empfänger die Post abholen wird.

Außerdem sind die zwischengeschalteten Postämter durch die stetig steigenden Datenmengen häufig überlastet, so daß eine Datenübertragung oft nur mit unkalkulierbaren Verzögerungen möglich ist. Durch solche Verzögerungen, die Ungewißheit des Eingangs beim Empfänger und den schlechten Datenschutz im Internet relativiert sich der Wert, der an sich sehr schnellen elektronischen Post, ganz erheblich.

Somit steht dem Endnutzer bis heute keine vollautomatische, einfache, direkte, zuverlässige und sichere Datenübertragung zwischen einem Sender-Endgerät und einem Empfänger-Endgerät, wie sie von Telefon- oder Telefaxverbindungen bekannt ist, zur Verfügung.

Ein Telefax kann z.B. heute innerhalb kürzester Zeit über eine Telefonleitung direkt an einen Empfänger gesendet werden, wobei es ohne Zutun des Empfängers ausgedruckt wird. Außerdem erhält der Sender eine Rückmeldung über die ordnungsgemäße Ablieferung des Telefaxes beim Empfänger. Die bekannten Übertragungsverfahren von elektronischer Post haben diese Vorteile nicht. Auch aus diesem Grund behält das Telefax seine Bedeutung bei, obwohl das Senden von Telefaxen prinzipiell langsamer ist, als das Senden elektronischer Post.

Sowohl bei Telefonaten als auch bei Telefaxen werden Daten unmittelbar von einem Endnutzer auf der Senderseite an einen Endnutzer auf der Empfängerseite übertragen, ohne daß der Sender oder Empfänger die Dienste Dritter in Anspruch nehmen müßte.

Aus der EP 0 671 831 A1 ist eine Einrichtung zum Empfang von Daten bekannt, die an ein Endgerät, wie ein Datenverarbeitungs- oder ein Datenwiedergabegerät, weitergeleitet werden sollen. Gehen bei ausgeschaltetem Endgerät Daten ein, versetzt die Einrichtung das Endgerät über ein Steuersignal in Betriebsbereitschaft. Die Daten werden dabei mindestens so lange zwischengespeichert, bis die Betriebsbereitschaft hergestellt ist. Nachteilig ist dabei, daß die Einrichtung nur in Hinblick auf die Erzeugung der Betriebsbereitschaft der Endgeräte arbeitet. Des weiteren werden die Nachteile der bestehenden elektronischen Postübermittlung durch diese Einrichtung nicht behoben.

Der Artikel "Entlastung des zentralen Rechners durch frei programmierbare Nachrichtenübertragungssteuerungen?" (bürotechnik Automation + Organisation, November 1972, S. 1348-1356) beschreibt einen Zentralrechner, an dem Datenstationen (engl.: terminals) von Endnutzern über Telefonleitungen angeschlossen sind. Zwischen dem Zentralrechner und den Datenstationen ist eine Steuereinheit angeordnet, die der Entlastung des zentralen Rechners dient. Die Steuereinheit wird als "front-end" für den Zentralrechner (back-end) bezeichnet.

Bei dem beschriebenen System ist es nachteilig, daß ein Endnutzer vollständig vom Zentralrechner abhängig ist, auf den er außerdem keinerlei Einflußmöglichkeiten hat. Ist z.B. ein Zentralrechner ausgefallen, so können alle angeschlossenen Endnutzer über ihre Datenstationen weder Daten senden noch empfangen. Des weiteren besteht für den Endnutzer jeweils ein erhöhter Aufwand, sich bei einem Zentralrechner "einzuloggen", um die für ihn bestimmten Daten auf seiner Datenstation zu lesen. Der gravierendste Nachteil besteht jedoch in der Tatsache, daß der Endnutzer an einer Datenstation keinerlei Benachrichtigung erhält, wenn für ihn bestimmte Daten "eingegangen sind", während seine Datenstation oder der Zentralrechner nicht eingeschaltet oder nicht betriebsbereit ist.

Aus der Veröffentlichung "Electronic Mailbox" in Electronics & Wireless World Bd. 91, Nr. 1594, August 1985, Surrey, Seiten 33-38 ist eine Vorrichtung und ein Verfahren zur direkten elektronischen Datenübertragung zwischen zwei Endgeräten bekannt. Dabei werden Mikrocomputersysteme verwendet, die den Endgeräten zugeordnet sind, wobei die Mikrocomputersysteme unabhängig vom Betriebszustand der Endgeräte eingehende Daten zwischenspeichern können. Außer einer direkten Datenübertragung zwischen zwei Endgeräten werden keine Maßnahmen oder Einrichtungen beschrieben, mit denen die Sicherheit der Datenübertragung oder die der Endgeräte erhöht werden könnte.

Die WO-A-93/20647 betrifft ein Mikrocomputersystem, das zwischen eine Datenleitung und ein Endgerät geschaltet ist. Insbesondere soll dieses Mikrocomputersystem ein- bzw. ausgehende Daten zwischenspeichern und eine Konversion zwischen verschiedenen Datenformaten durchführen. Auch dieser Druckschrift können keine besonderen Sicherheitsvorkehrungen entnommen werden.

Die US-A-5 379 349 betrifft ein Kommunikationssystem, bei dem bei einem Terminal eingehende Daten daraufhin überprüft werden, ob sie vollständig übertragen wurden. Dabei wird ein Log-File erstellt, daß als eine Art Empfangsbescheinigung für die eingegangenen Daten dient. Darüber hinaus enthält die Lehre dieser Druckschrift keine Mittel zur Erhöhung der Datensicherheit.

Ausgehend von diesem Stand der Technik liegt der vorliegenden Erfindung die Aufgabe zugrunde, ein Verfahren und eine Vorrichtung zur direkten Informationsübertragung zwischen zwei Endgeräten zu schaffen, bei dem ein Endgerät vor dem Empfang unerwünschter oder gefährlicher Daten besonders geschützt wird, um die Sicherheit der Datenübertragung und des Endgerätes zu erhöhen.

Diese Aufgabe wird erfindungsgemäß durch ein Verfahren mit den Merkmalen des Anspruchs 1 und durch ein Mikrocomputersystem mit den Merkmalen des Anspruchs 16 gelöst.

Das erfindungsgemäße Verfahren ermöglicht eine direkte Datenübertragung zwischen zwei Endgeräten (z.B. PC eines Endnutzers) einer Datenübertragungsstrecke. Eine direkte Datenübertragung bedeutet hier, daß Daten von einem Endnutzer an einen anderen Endnutzer direkt übertragen werden, ohne daß z.B. die Dienste eines Providers in Anspruch genommen werden müssen.

Dabei ist dem Empfängergerät, dem zweiten Endgerät, ein erfindungsgemäßes Mikrocomputersystem unmittelbar zugeordnet, wobei das Mikrocomputersystem gleichzeitig mit dem Endgerät und einer Datenleitung (z.B. Telefonleitung) oder nur mit einer Datenleitung verbunden ist. Im letzteren Fall ist das Endgerät (z.B. ein Laptop) vom Mikrocomputersystem abgekoppelt, so daß das Mikrocomputersystem quasi als "Anrufbeantworter" für das Endgerät fungiert. Das erfindungsgemäße Mikrocomputersystem ist eine autonome Einheit, die unabhängig vom Betriebszustand der Endgeräte Daten empfangen, senden, speichern oder bearbeiten kann.

Unter Endgeräten werden hierbei in der Regel Computer oder Computersysteme verstanden, die sich im unmittelbaren Zugriffsbereich der Endnutzer befinden. An dem zweiten Endgerät sind neben dem erfindungsgemäßen Mikrocomputersystem, Monitore, Drucker, Festplatten, optischen Speichermedien oder andere Peripheriegeräte anschließbar. Als Datenübertragungsnetz wird insbesondere das öffentliche Telefonnetz eingesetzt, was die Verfügbarkeit erhöht und die Kosten senkt.

Das erfindungsgemäße Mikrocomputersystem ist den Endgeräten direkt zugeordnet, so wie z.B. ein Anrufbeantworter einem Telefon direkt zugeordnet ist.

Durch Verwendung des autonom arbeitenden Mikrocomputersystems ist die Verarbeitung von empfangenen Daten vom Betriebszustand des Endgerätes allerdings vollständig entkoppelbar.

Das Mikrocomputersystem empfängt oder bearbeitet Daten unabhängig vom Betriebszustand des zugeordneten Endgerätes. Auch wenn z.B. aus Energiespargründen das Endgerät des Empfängers ausgeschaltet ist, können Daten von dem direkt zugeordneten Mikrocomputersystem vollautomatisch empfangen oder bearbeitet werden. Das Endgerät muß auch nicht ständig mit dem ihm zugeordneten Mikrocomputersystem physisch verbunden sein, was insbesondere für die heute weitverbreiteten mobilen Endgeräte von Bedeutung ist.

Durch Verwendung des autonom arbeitenden Mikrocomputersystems ist die Verarbeitung von empfangenen Daten vom Betriebszustand des zweiten Endgerätes allerdings vollständig entkoppelbar.

Das Mikrocomputersystem empfängt oder bearbeitet Daten unabhängig vom Betriebszustand derzugeordneten Endgeräte. Auch wenn z.B. aus Energiespargründen das Endgerät eines Senders oder Empfängers ausgeschaltet ist, können Daten von dem direkt zugeordneten Mikrocomputersystem vollautomatisch empfangen, bearbeitet oder gesendet werden. Die Endgeräte müssen auch nicht ständig mit den ihnen zugeordneten Mikrocomputersystem physisch verbunden sein, was insbesondere für die heute weitverbreiteten mobilen Endgeräte von Bedeutung ist.

Auf diese Weise können z.B. von einem Mikrocomputersystem automatisch Meldungen an andere Computer übertragen werden, ohne daß das Sende-Endgerät dafür in Betrieb oder an das Mikrocomputersystem angekoppelt sein muß. Von einem Mikrocomputersystem empfangene elektronische Post kann unabhängig vom Betriebszustand des zugeordneten Endgerätes bearbeitet und gespeichert werden.

In dem Mikrocomputersystem erfolgt eine vorbestimmbare Bearbeitung der Daten, die für das Endgerät bestimmt sind. Eine Speicherung im Mikrocomputersystem ist immer dann notwendig, wenn die zu sendenden Daten nicht sofort an das Datenübertragungsnetz gesendet werden können oder sollen oder die empfangenen Daten erst gesammelt werden sollen, weil das zugeordnete Empfänger-Endgerät nicht annahmebereit ist oder die Datenübertragungsgeschwindigkeit über das Datenübertragungsnetz erheblich langsamer ist als zwischen dem Mikrocomputersystem und dem zugeordneten Endgerät.

Dabei ist es wichtig, daß die Pufferspeicherkapazität, des dem Endgerät zugeordneten Mikrocomputersystems, eine Speicherung durch ein "Postamt" innerhalb des Datenübertragungsnetzes überflüssig macht. Durch das erfindungsgemäße Verfahren ist eine direkte Datenübertragung von einem Sender zu einem Empfänger möglich, ohne daß eine weitere Instanz, wie z.B. ein Service Provider, zur Datenbearbeitung oder Datenspeicherung notwendig ist. Seitens des Senders und Empfänger sind zur Datenübertragung keine besonderen Maßnahmen, wie z.B. eine Wechselwirkung mit einem Mailserver, notwendig. Das erfindungsgemäße Mikrocomputersystem ist allerdings kompatibel mit den zur Zeit verwendeten Datenübertragungsverfahren, so daß elektronische Post auch von einem Service Provider empfangen werden kann.

Zur Erhöhung der Sicherheit weist das erfindungsgemäße Verfahren einige spezielle Verfahrensschritte auf. So werden die beim Empfänger-Endgerät, dem zweiten Endgerät, eingehenden Daten von einem Mikrocomputersystem nach vorbestimmbaren Kriterien überprüft.

Erst wenn diese erste Überprüfung erfolgreich verlaufen ist, werden die eingehenden Daten vom Mikrocomputersystem bearbeitet oder gespeichert. Diese erste Überprüfung stellt eine erste Sicherheitsstufe dar, die verhindern soll, daß Unbefugte Daten an das Endgerät des Empfängers senden oder gar Zugriff auf das Endgerät bekommen. Das Mikrocomputersystem arbeitet dabei unabhängig vom Betriebszustand des ihm unmittelbar zugeordneten zweiten Endgerät.

Zur weiteren Verbesserung der Datensicherheit wird nach dem Einlesen der Daten in das Mikrocomputersystem die Datenverbindung, über die das Mikrocomputersystem die Daten empfangen hat, unterbrochen. Erst nach Beendigung der Datenverbindung stehen die Daten für eine Übertragung an das Endgerät bereit. Somit besteht nie eine unmittelbare Verbindung zwischen dem Endgerät und der Datenleitung. Somit ist es z.B. Hackern, die über eine bestehende Datenverbindung Zugriff auf das Endgerät erlangen wollen, unmöglich, Manipulationen am Endgerät vorzunehmen.

Bei dem erfindungsgemäßen Verfahren werden die von dem Mikrocomputersystem eingelesenen Daten erst nach der Unterbrechung nach vorbestimmbaren Bearbeitungsweisen und/oder zweiten vorbestimmbaren Kriterien bearbeitet. Durch die zweistufige Überprüfung bzw. Bearbeitung, die als Schleusenprinzip für Daten bezeichnet wird, wird eine wesentlich erhöhte Datensicherheit für das Endgerät erreicht.

In einer vorteilhaften Ausgestaltung des erfindungsgemäßen Verfahrens werden beim Mikrocomputersystem eingehende Daten, die von einem vorbestimmbaren Absender stammen, entweder abgelehnt oder akzeptiert. Der Absender kann beispielsweise an seiner Telefonnummer erkannt werden. Auf diese Art und Weise kann z.B. der Empfang unerwünschter Werbesendungen unterdrückt werden.

Auch ist es möglich in der zweiten Überprüfung eine Entschlüsselung oder eine Verifizierung einer elektronischen Unterschrift vorzunehmen. Nur bei einem positiven Ergebnis der zweiten Überprüfung (z.B. Entschlüsselung erfolgreich, elektronische Unterschrift in Ordnung) werden die Daten an das dem Mikrocomputersystem zugeordnete Endgerät übertragen.

In einer weiteren vorteilhaften Ausgestaltung des Verfahrens besteht die zweite Überprüfung in einer Überprüfung der in das Mikrocomputersystem eingelesenen Daten auf Computerviren. Dadurch wird verhindert, daß unter Umständen gefährliche Daten an das dem Mikrocomputersystem zugeordnete Endgerät gelangen.

Mit Vorteil werden vom Mikrocomputersystem Daten komprimiert, dekomprimiert, verschlüsselt oder entschlüsselt. Durch Datenkompression wird der Umfang, der über die Datenleitung zu übertragenden Daten erheblich vermindert, was die Übertragungsdauer und damit die Kosten senkt. Durch Datenkompression wird auch innerhalb des Mikrocomputersystems weniger Speicherplatz belegt. Werden Daten aus dem Mikrocomputersystem abgerufen, so können sie automatisch dekomprimiert werden, falls z.B. die abrufende Stelle über keine Möglichkeiten zur Dekompression verfügt. Durch die Verschlüsselung der Daten, die über eine Datenleitung gesendet werden, wird die Datensicherheit erheblich erhöht, was insbesondere im geschäftlichen Verkehr von großer Bedeutung ist.

In einer Ausführungsform des Verfahrens werden die von dem Mikrocomputersystem empfangenen Daten nach Prioritäten bearbeitet. Dazu werden bestimmte Daten mit einer Prioritätsinformation, wie z.B. mit einem Hinweis "Eilig!" oder "Vertraulich", versehen.

In einer anderen ausgezeichneten Gestaltung des erfindungsgemäßen Verfahrens, werden die vom Mikrocomputersystem empfangenen Daten nach vorbestimmbaren Kriterien sortiert und/oder bearbeitet. So können z.B. von bestimmten Absendern eingegangene Daten automatisch gelöscht oder an eine andere Adresse weitergeleitet werden.

In einer weiteren besonders vorteilhaften Ausgestaltung des Verfahrens ist ein direkter Zugang von der Datenleitung zum Endgerät unmöglich, da dies durch das zugeordnete Mikrocomputersystem unmöglich wird. Durch dieses Schleusensperrprinzip ist es unmöglich, daß ein Unbefugter eine durchgehende Datenverbindung zwischen der Datenleitung und dem Endgerät herstellt.

In einer besonders vorteilhaften Ausgestaltung des erfindungsgemäßen Verfahrens werden die vom ersten Endgerät ausgehenden Daten mit einem Namen (z.B. Loginnamen) und einer Telefonnummer als Adressenangabe versehen. Durch diese Art der Adressierung müssen sich die Absender von elektronischer Post nicht eine Vielzahl von Adressen merken, sondern können die ihnen bekannten Telefonnummern als Adressen verwenden.

Bei einer vorteilhaften Ausführung des erfindungsgemäßen Verfahrens sendet das Mikrocomputersystem automatisch eine Meldung, wenn es Daten empfängt. Eine solche automatisch gesendete Meldung kann insbesondere in einer Empfangsbescheinigung für die eingegangenen Daten bestehen.

Mit Vorteil erfolgt eine Fernbearbeitung der in dem Mikrocomputersystem gespeicherten Daten über die Datenleitung. Des weiteren ist es vorteilhaft, die Betriebsweise des Mikrocomputersystems über eine Fernbedienung zu steuern. Somit ist es möglich, ohne Inbetriebnahme eines Endgerätes z.B. nicht nur die im Mikrocomputersystem gespeicherten Daten zu bearbeiten, sondern auch die automatische Bearbeitung durch das Mikrocomputersystem zu beeinflussen. Dies ist von großer Bedeutung, wenn sich ein Benutzer längere Zeit nicht in unmittelbarer Nähe seines Endgerätes und des zugeordneten Mikrocomputersystems befindet. Dabei ist es von besonderem Vorteil, daß nur ein vorbestimmbarer Teil der im Mikrocomputersystem gespeicherten Daten bearbeitet oder weitergeleitet wird. Auf diese Weise ist es z.B. möglich, über eine Fernsteuerung einen Überblick über die in einem Mikrocomputersystem gespeicherten Daten zu bekommen, um nur die wichtigsten oder nur die kurzen elektronischen Postsendungen an einen in der Ferne weilenden Benutzer des zugeordneten Endgerätes zu übertragen.

Auch ist es vorteilhafterweise möglich, Daten, die z.B. mit einer bestimmten Kennzeichnung (z.B. "Vertraulich") versehen sind, erst nach einer Sicherheitsabfrage anzeigen zu lassen. Auf diese Weise kann eine 3enutzer-Hierarchie für die in dem Mikrocomputersystem gespeicherten Daten aufgebaut werden, so daß bestimmte Benutzer auf alle Daten, andere Benutzer hingegen nur auf einen Teil der Daten zugreifen können.

Mit Vorteil registriert das Mikrocomputersystem das Eingehen von Daten vorbestimmbarer Absender, veranlaßt automatisch einen Rückruf an den Absender, um diesen zu verifizieren. Erst nach erfolgreicher Verifikation des Absenders werden die Daten an das Mikrocomputersystem übertragen. Durch die Verifikation der Absenderadresse wird die Sicherheit bei der Datenübertragung verbessert.

Darüber hinaus wird mit Vorteil bei einer Ausgestaltung des erfindungsgemäßen Verfahrens durch eine Anzeige und/oder einen akustischen Signalgeber des Mikrocomputersystems angezeigt, wenn Daten in das Mikrocomputersystem eingelesen werden. Dadurch kann ein Nutzer auch bei ausgeschaltetem Endgerät erkennen, ob Daten an das Microcomputersystem, das dem Endgerät zugeordnet ist, gesendet wurde.

Ein erfindungsgemäßes Mikrocomputersystem zur automatischen und direkten Datenübertragung weist mindestens eine erste Schnittstelle auf, über die es mit einem Endgerät verbindbar ist. Über mindestens eine zweite Schnittstelle ist das Mikrocomputersystem mit einer Datenleitung verbindbar. Als Datenleitung wird insbesondere ein Telefonnetz eingesetzt. Das Mikrocomputersystem weist mindestens ein Prozessorsystem zur Steuerung der Funktion und mindestens ein Speicherelement zur Speicherung von Betriebssoftware, Programmen und Daten auf. Des weiteren verfügt das Mikrocomputersystem über eine Anzeige und / oder einen akustischen Signalgeber für die vom Mikrocomputersystem empfangenen oder gesendeten Informationen oder die im Mikrocomputersystem gespeicherten Informationen. Damit kann die Datenübertragung völlig unabhängig vom unmittelbar zugeordneten Computer überwacht werden.

Im Gegensatz zu einem Computer mit verschiedenen Peripheriegeräten, ist das Mikrocomputersystem als kompakte Einheit ausführbar, deren Prozessorsystem flexibel programmierbar ist. Des weiteren weist das Mikrocomputersystem keinen großen Energieverbraucher (z.B. Monitor) auf.

Aus diesen Gründen kann ein erfindungsgemäßes Mikrocomputersystem insbesondere als intelligente, autonome Einheit in dem erfindungsgemäßen Verfahren zur Datenübertragung eingesetzt werden. Dabei liegt es im erfinderischen Gedanken, daß das Mikrocomputersystem innerhalb eines anderen Geräts, wie z.B. einem Telefaxgerät, das an der gleichen Telefonleitung angeschlossen ist; einem Telefon, einem Anrufbeantworter oder einem Modem eingebaut ist.

Die erfindungsgemäße Vorrichtung weist weiterhin Überprüfungsmittel auf, mit denen eine erste Überprüfung der eingehenden Daten nach vorbestimmbaren Kriterien vorgenommen werden kann und Mittel, mit denen die Datenleitung unterbrochen werden kann. Durch diese Mittel wird die Datensicherheit stark verbessert.

Des weiteren verfügt die erfindungsgemäße Vorrichtung über Unterbrechungsmittel, mit denen die Verbindung zwischen der Datenleitung und dem Mikrocomputersystem automatisch unterbrochen werden kann. Auch verfügt das erfindungsgemäße Mikrocomputersystem über Bearbeitungsmittel, mit denen die in das Mikrocomputersystem eingelesenen Daten einer Bearbeitung nach vorbestimmbaren Bearbeitungsweisen und/oder zweiten vorbestimmbaren Kriterien unterzogen werden können. Damit ist ein direkter Zugriff von der Datenleitung durch das Mikrocomputersystem hindurch auf das unmittelbar zugeordnete Endgerät unmöglich.

In einer vorteilhaften Ausführungsform des Mikrocomputersystems verfügt das Mikrocomputersystem über Überprüfungsmittel zur Ablehnung oder Annahme eingehender Daten vorbestimmbarer Absender. Auf diese Weise kann eine unerwünschte Datenübertragung an das dem Mikrocomputersystem zugeordneten Endgerät verhindert werden. Dies dient u.a. dem Schutz vor Computerviren in Daten.

Mit besonderem Vorteil weist das erfindungsgemäße Mikrocomputersystem Bearbeitungsmittel auf, mit denen im Mikrocomputersystem gespeicherte Daten auf Computerviren geprüft werden können. Durch diese zusätzliche Überprüfung wird die Datensicherheit weiter erhöht.

Mit Vorteil weist das Mikrocomputersystem Bearbeitungsmittel zur Kompression, Dekompression, Verschlüsselung, Entschlüsselung oder Konvertierung von Daten auf. Durch diese Mittel kann das Mikrocomputersystem unabhängig von dem ihm zugeordneten Endgerät, die zu sendenden und die empfangenen Daten bearbeiten.

Des weiteren ist es vorteilhaft, wenn die Betriebsweise des Mikrocomputersystems und/oder die in ihm gespeicherten Daten über eine Fernbedienung steuerbar sind.

Mit Vorteil verfügt das Mikrocomputersystem über Mittel, die automatisch vorbestimmbare oder vom Mikrocomputersystem selbst generierte Meldungen senden. So können z.B. Empfangsbestätigungen für elektronische Post automatisch versandt werden, ohne daß das dem Mikrocomputersystem zugeordnete Endgerät oder ein System innerhalb des Datenübertragungsnetzes involviert ist.

Da bei elektronischer Post eine Vielzahl von Datenformaten verwendet wird, ist es vorteilhaft, daß ein erfindungsgemäßes Mikrocomputersystem Konvertierungsmittel für verschiedene Übertragungsprotokolle und/oder Datenformate, insbesondere für Fax-, Sprach- und/oder Bilddaten aufweist.

Ebenfalls ist es vorteilhaft, wenn das erfindungsgemäße Mikrocomputersystem Mittel aufweist, um ausgehende Daten mit einem Namen (z.B. Loginnamen) und einer Telefonnummer als Adressenangabe zu versehen, so daß die Adressierung der ausgehenden Daten in besonders einfacher Weise möglich ist.

Die Erfindung wird nachfolgend unter Bezugnahme auf die Figuren der Zeichnung an mehreren Ausführungsbeispielen näher erläutert. Es zeigen:
- Fig. 1: eine schematische Darstellung des bisher üblichen Verfahrens der Übertragung von elektronischer Post über das Internet;
- Fig. 2: eine schematische Darstellung des erfindungsgemäßen Verfahrens zur Übertragung von elektronischer Post;
- Fig. 3: eine schematische Darstellung des erfindungsgemäßen Mikrocomputersystems;
- Fig. 4: einen Programmablaufplan für eine Sicherheitsüberprüfung von an ein Mikrocomputersystem gesendete Daten (Schleusenprinzip für Daten).

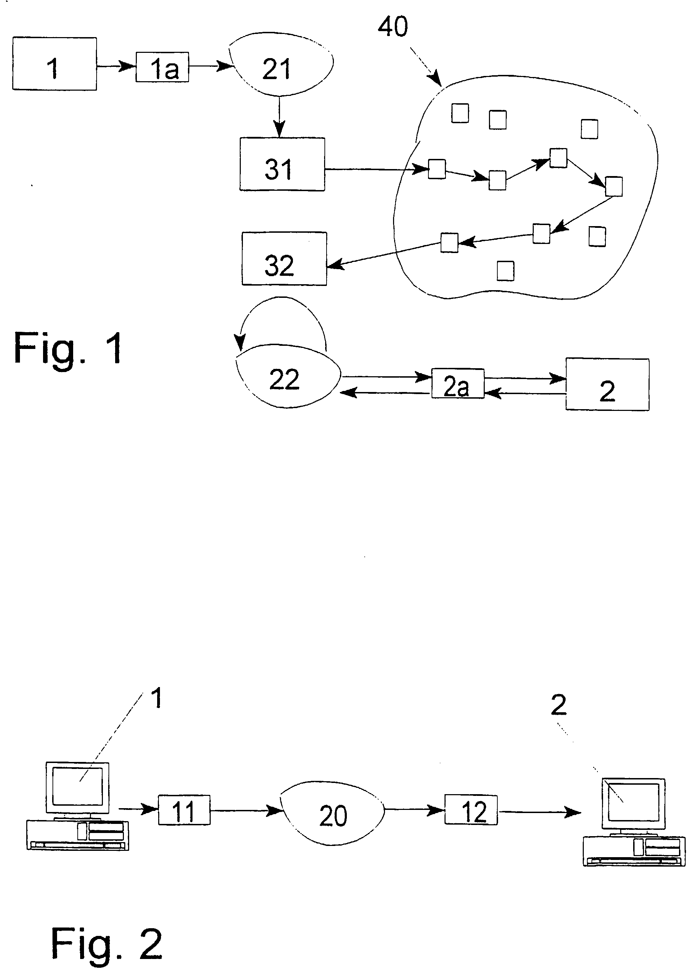

In Fig. 1 ist das bisher übliche Verfahren der Übertragung von elektronischer Post dargestellt. Unter elektronischer Post werden hierbei Daten z.B. in Binär-, Text-, Bild-, Ton- oder Videoformaten verstanden.

Die elektronische Post wird zwischen einem ersten Endgerät 1 und einem zweiten Endgerät 2 übertragen. Zur Veranschaulichung fungiert in dem hier gewählten Beispiel das erste Endgerät 1 als Sender, das zweite Endgerät 2 als Empfänger. Im folgenden werden unter Sender bzw. Empfänger jeweils die Endgeräte an den Enden einer Datenübertragungstrecke verstanden. Prinzipiell ist es möglich, daß die Rolle des Senders 1 und die des Empfängers 2 vertauscht werden oder sogar beide Endgeräte 1, 2 gleichzeitig Daten senden und empfangen.

Sender 1 und Empfänger 2 sind in diesem Beispiel Personalcomputer mit den üblicherweise angeschlossenen Peripheriegeräten wie Drucker und Monitor.

Sender 1 und Empfänger 2 sind jeweils über Übertragungsgeräte 1a, 2a, wie z.B. Modems, mit dem Telefonnetz 21, 22 verbunden.

Da die elektronische Post bei dem bisherigen Verfahren nicht direkt vom Sender 1 zum Empfänger 2 übertragbar ist, wird vom Sender 1 über das Telefonnetz 21 eine Verbindung zu einem Computer aufgenommen, der als "Senderpostamt" 31 fungiert, d.h. das Daten weiterleitet oder ggf. auch zwischenlagert. Dazu muß z.B. die Telefonnummer eines sogenannten Service Providers gewählt werden, der das Senderpostamt 31 betreibt. Zur Erfüllung seiner Funktion muß das Senderpostamt 31 ständig in Betriebsbereitschaft sein, was einen erheblichen Überwachungsaufwand und somit Kostenaufwand bedeutet. Nach Aufnahme der Verbindung zu dem Senderpostamt 31, wird die elektronische Post an das Senderpostamt 31 übertragen.

Vom Senderpostamt 31 wird die elektronische Post an ein weltweites Netz 40 übertragen, das aus einer unübersehbar großen Zahl von vernetzten Computern besteht. Der genaue Weg, den die elektronische Post nimmt, ist dabei nicht eindeutig festgelegt. Insbesondere ist es normal, daß elektronische Post innerhalb des weltweiten Netzes 40 auf verschiedenen Computern zwischengelagert wird, was nicht nur die Laufzeit der elektronischen Post erhöht, sondern auch zu einer Verschlechterung der Datensicherheit beiträgt, da bei einer Zwischenlagerung immer die erhöhte Gefahr des unbefugten Zugriffs auf die elektronische Post besteht.

Vom weltweiten Netz 40 wird die elektronische Post an einen Computer weitergeleitet, der als Empfängerpostamt 32 fungiert. Wie das Senderpostamt 31, muß auch das Empfängerpostamt 32 ständig betriebsbereit sein, was wiederum zu einer Kostenerhöhung beiträgt.

Nun bleibt die elektronische Post solange auf dem Empfängerpostamt 32 gespeichert, bis vom Empfänger 2 über das Übertragungsgerät 2a eine explizite Anfrage an das Empfängerpostamt 32 ergeht, was in Fig. 1 durch den bogenförmigen Pfeil symbolisiert ist.

Der Empfänger 2 wird nach dem Eintreffen einer elektronische Postsendung bei seinem Postamt nicht informiert. Das ist heute einer der gravierendsten Nachteile des Internets. Zur Abholung der Post muß der Empfänger 2 gesonderte Maßnahmen einleiten - immer ohne zu wissen, ob überhaupt Post für ihn eingegangen ist. Bei diesem Verfahren zum Austausch von elektronischer Post gibt es keine direkte, ununterbrochene und sichere Datenübertragung vom Sender 1 zum Empfänger 2.

Das ist aber die heute übliche Art des Datenempfangs im Internet. Ausnahmen von diesem Verfahren bestehen nur, wenn der Empfänger eine teuere Standleitung zum Internet betreibt oder der Empfänger beim Eintreffen der Daten zufällig mit seinem Postamt verbunden ist. Nur in diesen beiden Fällen erhält der Empfänger die Daten unmittelbar nach dem Eintreffen an seinem Postamt.

Insgesamt läßt sich feststellen, daß bei dem bisher üblichen Austausch von elektronischer Post eine Vielzahl von Stationen zu durchlaufen sind, was einen erheblichen Aufwand, unnötige Verzögerungen, Kosten und Unsicherheiten verursacht. Insbesondere können elektronische Postsendungen nicht ohne weiteres automatisch empfangen werden, wie das heute mit Anrufbeantwortern bei Telefonaten problemlos möglich ist. Auch beim Telefaxversand werden Daten unmittelbar an den Empfänger übertragen, ohne daß die Telefaxe bei einer Zwischenlagerstelle abgerufen werden müssen. Einzige Voraussetzung ist dabei, daß der Anrufbeantworter oder das Telefaxgerät ständig betriebsbereit und am Telefonnetz angeschlossen ist.

In Fig. 2 ist das erfindungsgemäße Verfahren dargestellt. Wie bei dem in Fig. 1 beschriebenen Verfahren, wird auch hier die Übertragung elektronischer Post vom Sender 1 zum Empfänger 2 dargestellt. Auch hier ist es prinzipiell möglich, die Rolle des Senders 1 und die des Empfängers 2 zu vertauschen. Sender 1 und Empfänger 2 sind in diesem Beispiel Personalcomputer (Endgeräte) an den Enden einer Datenübertragungsstrecke, mit den üblicherweise angeschlossenen Peripheriegeräten, wie Drucker und Monitor. Es liegt aber im Gedanken der Erfindung, daß auch Computer in lokalen (hausinternen) Computernetzwerken als Sender 1 oder Empfänger 2 einsetzbar sind.

Die automatische und direkte Übertragung von elektronischer Post mit dem erfindungsgemäßen Verfahren findet über erfindungsgemäße Mikrocomputersysteme 11, 12 und ein Telefonnetz 20 statt.

Dabei ist dem Sender 1 ein erstes Mikrocomputersystem 11, dem Empfänger 2 ein zweites Mikrocomputersystem 12 unmittelbar zugeordnet, d.h. sowohl Sender 1 als auch Empfänger 2 haben als Endnutzer unmittelbaren Zugriff auf die jeweils zugeordneten Mikrocomputersysteme 11, 12.

Das dem Sender 1 zugeordnete erste Mikrocomputersystem 11 muß nicht ständig mit dem Sender 1 verbunden sein, sondern nur dann, wenn Daten mit dem Sender 1 ausgetauscht werden sollen. Das Senden kann z.B. autonom in Abhängigkeit von Sendeprioritäten des Senders 1 und/oder zeitgesteuert zur Ausnutzung von günstigen Telefontarifen erfolgen.

Das dem Empfänger 2 zugeordnete zweite Mikrocomputersystem 12 muß nicht ständig mit dem Empfänger 2 verbunden sein, sondern es kann z.B. auch elektronische Post empfangen, wenn der Empfänger 2 nicht angeschlossen oder nicht empfangsbereit ist. Ist der Empfänger 2 empfangsbereit und angeschlossen, meldet das Mikrocomputersystem 12 an den Empfänger 2, daß es Daten senden möchte, da z.B. elektronische Post eingegangen ist. Der Empfänger 2 holt dann die Daten sofort oder zu einem späteren Zeitpunkt ab.

Die Mikrocomputersysteme 11, 12 sind also autonome, ständig mit dem Telefonnetz 20 verbundende Geräte, die in der räumlichen Nähe des Senders 1 bzw. des Empfängers 2 angeordnet sind. In jedem Fall hat der Benutzer des Senders 1 oder des Empfängers 2 ohne Einschaltung Dritter Zugriff auf die jeweils zugeordneten Mikrocomputersysteme 11, 12.

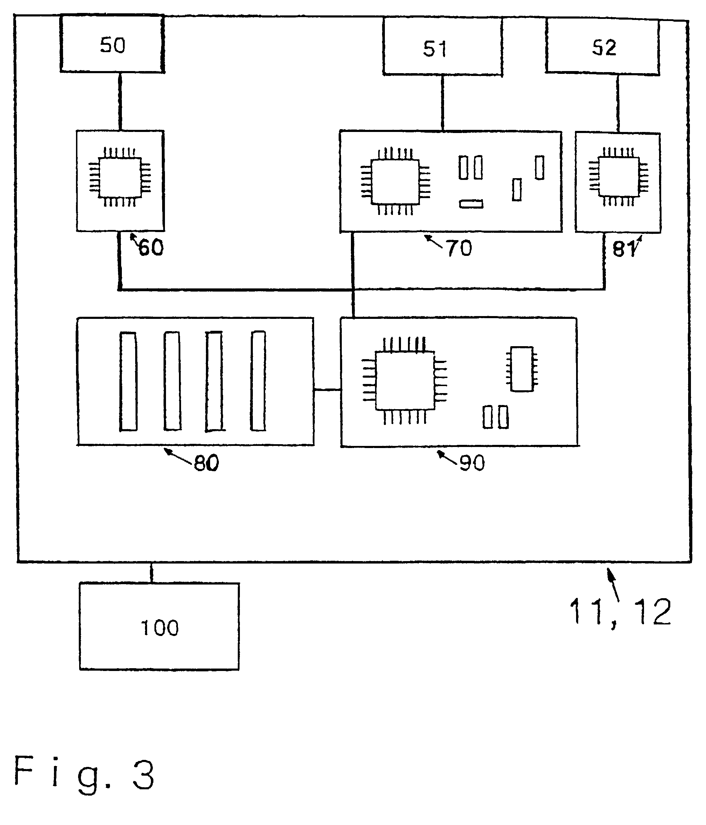

Die Mikrocomputersysteme 11, 12 verfügen über eigene Prozessorsysteme 90, Stromversorgungen 100 und Speicherelemente 80 (siehe Fig. 3), so daß sie völlig unabhängig von dem Betriebszustand des ihnen zugeordneten Senders 1 bzw. Empfängers 2 sind. So kann beispielsweise ein Empfänger 2 völlig von dem zweiten Mikrocomputersystem 12 abgekoppelt sein, wobei eingehende elektronische Post vom zweiten Mikrocomputersystem 12 gespeichert und bearbeitet wird. Eine Zwischenlagerung innerhalb des Datenübertragungsnetzes (z.B. Empfängerpostamt 32 in Fig. 1) ist daher überflüssig. Eine Beschreibung von Funktionen des erfindungsgemäßen Verfahrens wird im Zusammenhang mit dem Prozessorsystem 90 des Mikrocomputersystems 11, 12 gegeben.

Im folgenden wird der Ablauf einer Datenübertragung beschrieben. Will der Endnutzer des Senders 1 eine Nachricht an einen Endnutzer des Empfänger 2 senden, versieht er die zu versendenden Daten mit dem Namen des Empfängers 2 und dessen Telefonnummer in einem festgelegten Format:
Name+CountryCode-CityCode-PhoneNumber
z.B. Hans.Meier+49-30-4019001

Zu einem vorbestimmbaren Zeitpunkt wählt das Mikrocomputersystem 11, das dem Sender 1 zugeordnet ist, die in der Adresse gegebene Telefonnummer des Empfängers 2 und stellt damit eine Datenverbindung zum Mikrocomputersystem 12 des Empfängers 2 her. Dabei werden im wesentlichen die aus der Modemtechnologie bekannten Konventionen für die Festlegung der Datenübertragungsrate, der Kommunikationsprotokolle und der Datenkompression verwendet.

Nach der Verbindungsaufnahme findet ein Parameteraustausch zwischen den Mikrocomputersystemen 11, 12 statt. Dabei vergleicht das empfangende Mikrocomputersystem 12 die Adressenangaben mit einer vorbestimmbaren Liste. In dieser Liste sind Adressen gespeichert, die abgelehnt (Negativliste) oder akzeptiert werden (Positivliste).

Die Negativliste dient dazu, die Übertragung unerwünschter elektronischer Post zu vermeiden. Die Positivliste erlaubt, daß nur einem begrenzten Nutzerkreis die Datenübertragung an ein Endgerät 1, 2 erlaubt wird. Beide Maßnahmen dienen der Erhöhung der Sicherheit gegenüber Computerviren, die z.B. auch Textdateien infizieren können. Eingehende Daten werden nur von in der Positivliste aufgeführten Absendern angenommen, so daß alle anderen Daten schon zu Beginn des Verbindungsaufbaus abgewiesen werden und die Verbindung getrennt wird.

In einem Parameterblock sind die Namens- und Telefoninformationen enthalten, die ein Sender 1 an seinem Endgerät eingibt. Die Informationen über die Zeitzone und die Sendezeit dienen dazu, daß Datenübertragungen nur zu bestimmten Zeiten zugelassen werden. Die Informationen über den Parameterblock selbst dienen der Datensicherheit bei der Datenübertragung. Der Datenblock, der bei dem Parameteraustausch zwischen den Mikrocomputersystemen 11, 12 übertragen wird, hat die folgende Struktur:

| Datengröße [Byte] | Dateninhalt |
|---|---|
| 2 | Länge des Parameterblocks |
| 15 | CountryCode-CityCode-PhoneNumber |
| 15 | Name |
| 1 | Zeitzone |
| 4 | Sendezeit |
| 2 | Prüfsumme für den Parameterblock |

Nach einem erfolgreichen Parameteraustausch steuert das sendende Mikrocomputersystem 11 das empfangene Mikrocomputersystem 12 über bestimmte Befehle. Der Befehlssatz umfaßt dabei die Befehle "Daten empfangen" und "Verbindung abbrechen". In alternativen Ausführungsformen, insbesondere bei einer Fernbedienung, kann dieser Befehlssatz auch weitere Befehle umfassen.

Ist das empfangende Mikrocomputersystem 12 für eine Datenübertragung bereit, so sendet es einen entsprechenden Befehl an das sendende Mikrocomputersystem 11. Die Daten werden dann direkt, fehlerfrei und unmittelbar an den Endnutzer übertragen, ohne daß eine Zwischenspeicherung durch einen Zentralrechner erfolgt. Ein Endnutzer innerhalb eines größeren lokalen Computernetzes (z.B. local area network (LAN)) kann dabei durch den in der Adresse gegebenen Namen (z.B. Loginname) eindeutig identifiziert werden.

Ein Header der elektronischen Post enthält Informationen, anhand derer das empfangende Mikrocomputersystem 12 die Weiterbearbeitung der Daten steuert. Insbesondere enthält der Header der elektronischen Post Informationen über die Größe der Post und über den Typ (z.B. komprimiert, verschlüsselt etc.). Auch weist der Header Informationen über die Priorität auf, so daß die eingehenden Daten vom Mikrocomputersystem nach Prioritäten sortiert werden können. Des weiteren enthält der Header Informationen über die Zeitzone und eine Zeitmarkierung, damit der Empfang der Post eindeutig bestimmbar ist. Auch enthält der Header Informationen über sich selbst, so daß eine Überprüfung auf die Integrität der übertragenen Daten vorgenommen werden kann. Der Header des übertragenen elektronischen Post weist die folgende Struktur auf:

| Datengröße [Byte] | Datenbeschreibung |
|---|---|
| 2 | Größe des Headers |
| 4 | Größe der elektronischen Post |
| 1 | Typ der elektronischen Post |
| 1 | Prioritätskennzeichnung |
| 1 | Zeitzone |
| 4 | Zeitmarkierung |
| 2 | Prüfsumme des Headers |

Erhält das Mikrocomputersystem 12 eine elektronische Postsendung, wird eine automatische Empfangsbescheinigung an den Sender 1 der elektronischen Post geschickt, so daß sofort eine Rückmeldung erfolgt, daß die elektronische Post fehlerfrei beim Empfänger 2 eingegangen ist, d.h. bei dem Mikrocomputersystem 12, das dem Empfänger 2 zugeordnet ist.

Nach dem die Datenübertragung abgeschlossen ist, trennen sich die Mikrocomputersysteme 11, 12 von der Telefonleitung.

Ist die lokale Speicherkapazität des empfangenden Mikrocomputersystems 12 momentan erschöpft, wird ein Befehl an das sendende Mikrocomputersystem 11 übermittelt, mit dem zu einer Datenübertragung zu einem späteren Zeitpunkt aufgefordert wird (automatische Wahlwiederholung). In dem Fall, daß generell keine Möglichkeit zum Datenempfang besteht, wird übermittelt, daß eine automatische Wahlwiederholung zwecklos ist. Kommt es bei der Datenübertragung zu irgendwelchen Fehlern, so wird ein Error Befehl übermittelt, der eine erneute Sendung der Daten veranlaßt.

Zur weiteren Erhöhung der Sicherheit verfügen die Mikrocomputersysteme 11, 12 über Programme zur Überprüfung der eingehenden Daten auf Viren.

Außerdem verfügen die Mikrocomputersysteme 11, 12 über ein Programm, mit dem das Eingehen von Daten von bestimmten Absendern registriert wird und automatisch ein Rückruf beim Absender der Daten erfolgt. Durch den Rückruf wird sichergestellt, daß nicht zufällig eine Fehlverbindung vorliegt.

Durch den Rückruf wird der Absender der Daten z.B. durch einen Vergleich mit den Positiv- bzw. Negativlisten verifiziert. Erst wenn die Verifizierung ergeben hat, daß die Daten vom Nutzer des Empfänger-Endgerätes 2 auch zugelassen sind, wird eine Datenverbindung herstellt, so daß die Daten übertragen werden können.

Auch ist es möglich, daß das Mikrocomputersystem 12, das dem Empfänger-Endgerät 2 zugeordnet ist, sich die Daten nach der Verifikation selbstständig beim Absender der Daten abholt. Auch ein Absender von Daten, der sich mißbräuchlich der Adresse eines Absenders auf einer Positivliste bedienen würde, hätte bei dem Rückrufverfahren keinen Erfolg. Die Identifikation des Absenders erfolgt über die Telefonnummer, an der der Computer des Absenders angeschlossen ist.

Durch die Rückruffunktion hat das Empfänger-Endgerät 2 vollständige Kontrolle über alle empfangenen Daten, was die Datensicherheit erheblich erhöht.

In dem in Fig. 2 dargestellten Beispiel wird die erfindungsgemäße Übertragung von elektronischer Post zwischen zwei Endgeräten, nämlich zwischen einem Sender 1 zu einem Empfänger 2 beschrieben, wobei beiden jeweils unmittelbar ein Mikrocomputersystem 11, 12 zugeordnet ist. Es ist Teil des erfinderischen Gedankens, daß auch mehrere Mikrocomputersysteme 11, 12 einem Sender-Endgerät 1 bzw. Empfänger-Endgerät 2 zugeordnet sind. Des weiteren erstreckt sich der erfinderische Gedanke auch auf solche Datenübertragungen, bei denen nur einem Endgerät 1, 2 ein erfindungsgemäßes Mikrocomputersystem 11, 12 zugeordnet ist. Damit ist das erfindungsgemäße Verfahren kompatibel mit den heute üblichen Datenübertragungsverfahren. Wesentlich ist, daß mindestens bei einem, der am Datenaustausch teilnehmenden Endgeräte 1, 2 eine Entkopplung zwischen Betriebszustand und Datenaustausch bzw. Datenbearbeitung möglich ist.

Da die Mikrocomputersysteme 11, 12 ständig für die Datenübertragung einsatzbereit sind, können sie auch zur Fernsteuerung von anderen Systemen, wie z.B. einer Heizung, oder einer Diebstahlsicherung, verwendet werden, die mit den Mikrocomputersystemen 11, 12 verbunden ist. So können bestimmte Signale, insbesondere elektronische Post im Klartext, an ein Mikrocomputersystem 11, 12 gesendet werden, um eine Heizung ein- oder auszuschalten.

Da die Mikrocomputersysteme 11, 12 auch Daten senden können, sind Meldungen von daran angeschlossenen Systemen direkt an andere übertragbar. Tritt z.B. in einem Heizungssystem, das an das Mikrocomputersystem 11, 12 angeschlossen ist, ein Fehler auf, so kann automatisch eine Benachrichtigung an ein Wartungsunternehmen gesandt werden. Ist eine Diebstahlssicherung an das Mikrocomputersystem 11, 12 angeschlossen, so kann bei Alarmauslösung automatisch die Polizei verständigt werden.

Von externen Stellen ist über das Mikrocomputersystem 11, 12 der Zustand des betreffenden Systems abfragbar. So kann eine Wartungsfirma z.B. über das Mikrocomputersystem 11, 12 einen Statusbericht des Heizungssystems anfordern, von dem eine Fehlermeldung eingegangen war.

In Fig. 3 ist der Aufbau eines erfindungsgemäßen Mikrocomputersystems 11, 12 schematisch dargestellt. Im folgenden wird aus Gründen der Einfachheit im wesentlichen nur auf das Mikrocomputersystem 12 Bezug genommen, das dem hier nicht dargestellten Empfänger 2 zugeordnet ist. Das dem Sender 1 zugeordnete Mikrocomputersystem 11 ist im Prinzip baugleich, so daß ein Mikrocomputersystem 11, 12 sowohl zum Empfang als auch zum Senden von Daten verwendbar ist. Beide Vorgänge können gleichzeitig erfolgen, wenn für die Übertragung das ISDN-Verfahren genutzt wird.

Das Mikrocomputersystem 12 verfügt über Schnittstellen 50, 51, 52 zur Verbindung mit dem hier nicht dargestellten Empfänger und dem ebenfalls nicht dargestellten Telefonnetz 20.

Die Schaltung des Mikrocomputersystems 12 besteht prinzipiell aus vier elektronischen Baugruppen 60, 70, 80, 90, die untereinander und mit den Schnittstellen 50, 51, 52 verbunden sind. Eine autonome Stromversorgung 100 des Mikrocomputersystems 12 ist schematisch dargestellt. Die Stromversorgung besteht zum einen aus einem Anschluß an ein normales Stromnetz, zum anderen aus einem Batteriesystem, das die Stromversorgung für den Fall des Transportes oder einer Netzunterbrechung sicherstellt. Innerhalb des Gerätes sind keine großen Stromverbraucher vorgesehen, so daß ein typisches Gerät Mikrocomputersystem 12 eine Leitungsaufnahme von 0.1 bis 1 W aufweist.

Über eine erste Schnittstelle 50 ist das Mikrocomputersystem 12 mit dem Empfänger 2 und über eine zweite Schnittstelle 51 mit dem Telefonnetz 20 verbunden. Über eine dritte Schnittstelle 53 ist ein externes Modem anschließbar.

Die erste Schnittstelle 50 vom Typ RS232 ist mit einem Computer Interface 60 verbunden, das die Datenübertragung zwischen dem Empfänger 2 und dem Mikrocomputersystem 12 steuert und überwacht. In alternativen Ausführungsformen kann die erste Schnittstelle 50 als SCSI-, Infrarot-, Funk- oder parallele Schnittstelle ausgeführt sein. Bei der Steuerung des Datenaustauschs wird z.B. das XModem-Protokoll eingesetzt.

Ein Speicherelement 80 ist mit einem Prozessorsystem 90 verbunden. In dem dargestellten Fall stehen im Speicherelement Schreib/Lesespeicherchips (RAM) mit 4 MB Speicherkapazität zur Verfügung. Steckplätze für eventuelle Speichererweiterungen sind vorgesehen. In alternativen Ausführungen können z.B. auch Festplatten oder Diskettenlaufwerke als zusätzliche Speicherelemente 80 verwendet werden. Es liegt im erfinderischen Gedanken, daß ggf. externe Speichermedien an das Mikrocomputersystem 12 anschließbar sind, was insbesondere bei extrem großen Datenmengen von Vorteil ist.

Das Prozessorsystem 90 steuert die Funktion des Mikrocomputersystems 12, wobei ein Betriebssystem innerhalb des Mikrocomputersystems 12 gespeichert ist. Das Betriebssystem ist multitasking-fähig, so daß mehrere Datenübertragungen gleichzeitig möglich sind. Das Prozessorsystem 90 ist in einer Hochsprache programmierbar. In alternativen Ausführungsformen können auch mehrere parallele Anschlüsse an das Datenübertragungsnetz und/oder zugeordnete Endgeräte vorgesehen sein.

Die Programmierung des Mikrocomputersystems 12 kann über das zugeordnete Endgerät 2 erfolgen. Auch über eine hier nicht dargestellte Fernbedienung, z.B. per Telefon oder Remote-Computer, kann eine Programmierung vorgenommen werden. Dabei ist bei einer Fernbedienung aus Sicherheitsgründen eventuell nur ein Teil des Mikrocomputersystems 12 programmierbar.

Die Funktionalität des Mikrocomputersystems 12 kann durch im Speicherelement 80 gespeicherte Programme verschiedensten Anforderungen angepaßt werden. Insbesondere können die bestehenden Datenübertragungsverfahren oder Angebote von Service Providern genutzt werden. So kann das Mikrocomputersystem 12 Daten von einem Sender 1 empfangen, der nicht über ein zugeordnetes Mikrocomputersystem 11 verfügt.

Im Mikrocomputersystem sind Programme zur Datenkompression bzw. Datendekompression, zur Datenverschlüsselung bzw. Datenentschlüsselung und zur Datenkonvertierung gespeichert, die vom Prozessorsystem 90 entsprechend den jeweiligen Anforderungen eingesetzt werden. Durch diese Programme können die Daten in dem Mikrocomputersystem 12 völlig unabhängig vom Betriebszustand oder gar dem Vorhandensein des zugeordneten Empfängers 2 bearbeitet werden.

Von besonderer Bedeutung sind Mittel, mit denen ein unbefugtes Lesen oder Manipulieren der Daten des Mikrocomputersystems 12 verhindert werden. Dazu wird insbesondere ein Paßwortsystem eingesetzt.

Prinzipiell ist das Mikrocomputersystem 12 als sogenannter "Firewall-Rechner" einsetzbar, der einen großen Schutz für das zugeordnete Endgerät 2 bietet. Ein direkter Zugriff von der Telefonleitung 20 auf das zugeordnete Endgerät 2 bzw. andere daran angeschlossene Computer durch das Mikrocomputersystem 12 ist nicht möglich.

Das Mikrocomputersystem 12 fungiert damit als eine Art Schleuse, bei der eingehende Daten zuerst nur in das Mikrocomputersystem 12 gelangen.

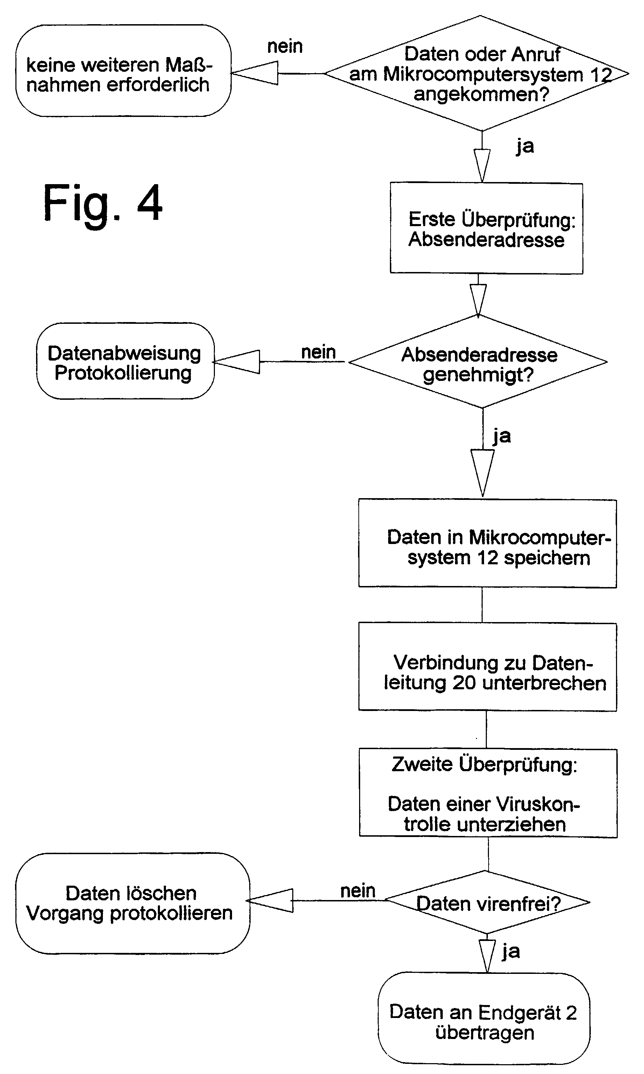

In Fig. 4 ist der Ablauf dieses "Schleusenprinzips" für das Mikrocomputersystem 12 dargestellt. Werden Daten von einer Datenleitung 20 an das Mikrocomputersystem 12 übertragen, so wird in einer ersten Überprüfung die Absenderadresse der Daten festgestellt. Die erste Überprüfung kann aber auch ein Codewort und andere Kriterien betreffen. Befindet sich der Absender nicht auf einer Negativliste, so werden die Daten im Mikrocomputersystem 12 gespeichert. Befindet sich die Absenderadresse auf einer Negativliste, so werden sie abgewiesen, wobei der Eingangsversuch der Daten vom Mikrocomputersystem 12 protokolliert wird.

Nach einer erfolgreichen ersten Überprüfung und einer Speicherung der Daten im Mikrocomputersystem wird die Verbindung zwischen der externen Telefonleitung 20 und dem Mikrocomputersystem 12 unterbrochen (Modem legt auf).

Erst nach der Unterbrechung der Verbindung zwischen der Telefonleitung 20 und dem Mikrocomputersystem 12 werden die Daten vom Mikrocomputersystem 12 in einer zweiten Überprüfung auf Viren untersucht. Erst wenn auch dieser Test erfolgreich verlaufen ist, wird die Verbindung zum Endgerät 2 hergestellt und die Daten an dieses übertragen. Fällt die zweite Überprüfung der Daten negativ aus, werden die Daten gelöscht und der designierte Empfänger erhält vom Mikrocomputersystem 12 eine Nachricht über die Abweisung der Daten und eine Angabe über den Absender.

Somit ist immer nur ein "Schleusentor" offen; zuerst die Verbindung von der Telefonleitung 20 zum Mikrocomputersystem 12, dann die Verbindung vom Mikrocomputersystem 12 zum zugeordneten Endgerät 2. Durch die Schleusenfunktion existiert nie eine durchgehende Verbindung von der externen Datenleitung 20 (z.B. Telefonnetz) zu dem Endgerät 2. Dadurch ist der direkte Durchgriff von Unbefugten (z.B. Hacker) auf ein Endgerät 2 absolut ausgeschlossen.

Die Steuerprogramme des Mikrocomputersystems 12 sind in einem ROM oder EPROM gespeichert, so daß eine Umprogrammierung zur Durchdringung des Mikrocomputerssystems 12 unmöglich ist.

Da die Menge der elektronischen Post ständig zunimmt, ist in dem Mikrocomputersystem 12 ein Programm gespeichert, das eingehende Daten filtert und sortiert. Das Programm im Mikrocomputersystem 12 bestimmt, welche Daten durchgelassen werden und welche nicht. Durch diese Maßnahme wird die Sicherheit erheblich erhöht.

Als Sortierkriterien können z.B. Größe der eingehenden elektronischen Post, Absender, Datum oder Betreff verwendet werden. Somit können beispielsweise besonders große elektronische Postsendungen durch das Mikrocomputersystem 12 abgewiesen werden.

Insbesondere ist eine Liste von Absendern gespeichert, deren elektronische Post ohne weiteres durchgelassen wird. Bei nicht zugelassenen Absendern wird vom Mikrocomputersystem 12 automatisch eine Antwort an den Absender verschickt, in der über die nicht erfolgte Zustellung berichtet wird. Unter Umständen wird eine Ausweichadresse angegeben. In anderen Fallen können elektronische Postsendungen automatisch gelöscht werden.

Des weiteren ist es möglich, geheime Zusatzcodes mit bestimmten Absendern von elektronischer Post zu vereinbaren, so daß nur die Post mit geheimen Zusatzcodes vom Mikrocomputersystem 12 überhaupt angenommen werden.

Das Mikrocomputersystem 12 verfügt über die Möglichkeit, Daten mit einer Kennzeichnung der Sende- oder Empfängerpriorität zu versehen. So kann über eine Sendepriorität festgelegt werden, wann bestimmte Daten an die Telefonleitung 20 übertragen werden sollen. So können Daten sofort oder zu einem vorbestimmbaren Zeitpunkt gesendet werden. Beispielsweise kann das Mikrocomputersystem 12 automatisch die kostengünstigste Zeit für eine Datenübertragung ermitteln, so daß bestimmte Daten zu besonders günstigen Telefontarifen gesendet werden. Daten an einen bestimmten Absender können aber auch über eine gewisse Zeit gesammelt werden und dann zu einem besonders günstigen Tarif auf einmal gesendet werden. Dies ist insbesondere bei dem Versand von elektronischer Post über mehrere Zeitzonen von großem Nutzen.

Mit einer Kennzeichnung einer Empfängerpriorität kann die Bearbeitung von eingehender elektronischer Post effizient gestaltet werden. Somit können z.B. bestimmte Absender von elektronischer Post generell eine hohe Prioritätskennzeichnung erhalten, um eine besondere Wichtigkeit beim Empfänger 2 zu signalisieren.

Des weiteren verfügt das Mikrocomputersystem 12 über Mittel zur Überwachung der Datenübertragungskosten. So werden die jeweils anfallenden Kosten der ausgehenden elektronischen Post gespeichert, so daß immer eine aktuelle Information über die tatsächlich angefallenen Kosten der Datenübertragungen vorliegt. Die Kosten können auch nach bestimmten Kategorien, wie z.B. bestimmten Sendeadressen oder Sendezeiten, aufgeschlüsselt werden. Auf Anfrage oder zu vorbestimmten Zeiten können die Kostendaten an den Verwalter des elektronischen Postsystems übermittelt werden.

Das Prozessorsystem 90 ist mit einem ISDN-Controller 70 verbunden, der die Übertragung der Daten an die Telefonleitung 20 überwacht und steuert. Die Ansteuerung des ISDN-Controllers 70 erfolgt über CAPI. Alternative Ausführungsformen des Mikrocomputersystems 12 weisen ein Modem oder eine Kombination von ISDN-Anschluß und Modem auf. Die Datenübertragung an die Telefonleitung 20 erfolgt über die zweite Schnittstelle 51, die mit dem ISDN-Controller 70 verbunden ist. Der Prozessor 90 ist außerdem über einen Schnittstellen-Controller 61 mit der dritten Schnittstelle 52 verbunden, über die ein externes Modem anschließbar ist.

Die Erfindung beschränkt sich in ihrer Ausführung nicht auf die vorstehend angegebenen bevorzugten Ausführungsbeispiele. Vielmehr ist eine Anzahl von Varianten denkbar, die von dem erfindungsgemäßen Verfahren und dem Mikrocomputersystem auch bei grundsätzlich anders gearteten Ausführungen Gebrauch machen.

## Patentansprüche

1. Verfahren zur automatischen und direkten Datenübertragung zwischen einem ersten Endgerät (1) als Sender und einem zweiten Endgerät (2) als Empfänger, insbesondere zur Übertragung von elektronischer Post, über eine Datenleitung (20), bei dem die Datenübertragung über ein dem zweiten Endgerät unmittelbar zugeordnetes Mikrocomputersystem (12) erfolgt, wobei das Mikrocomputersystem (12) unabhängig vom Betriebszustand des zugeordneten zweiten Endgerätes (2) Daten empfängt, sendet, speichert oder bearbeitet,
**dadurch gekennzeichnet**, daß
a) die am Mikrocomputersystem (12) eingehenden Daten vor einer Bearbeitung und/oder Speicherung einer ersten Überprüfung nach vorbestimmbaren ersten Kriterien unterzogen werden,
b) die Daten nur nach einem positiven Ergebnis der ersten Überprüfung in das Mikrocomputersystem (12) eingelesen werden,
c) die Verbindung zwischen der Datenleitung (20) und dem Mikrocomputersystem (12) nach Einlesen der eingehenden Daten automatisch unterbrochen wird,
d) die eingelesenen Daten im Mikrocomputersystem (12) erst dann nach vorbestimmbaren Bearbeitungsweisen und/oder zweiten vorbestimmbaren Kriterien bearbeitet werden, und anschließend
e) die Daten an das dem Mikrocomputersystem (12) zugeordnete zweite Endgerät (2) übertragen werden.

2. Verfahren nach Anspruch 1, **dadurch gekennzeichnet**, daß bei der Überprüfung der beim Mikrocomputersystem (12) eingehenden Daten, Daten vorbestimmbarer Absender anhand der Absenderadresse entweder ablehnt oder akzeptiert werden.

3. Verfahren nach Anspruch 1 oder 2, **dadurch gekennzeichnet**, daß eingelesene Daten einer zweiten Überprüfung nach den zweiten vorbestimmbaren Kriterien unterzogen werden und nur nach einem positiven Ergebnis der zweiten Überprüfung, die Daten an das zweite Endgerät (2) weitergeleitet werden.

4. Verfahren nach Anspruch 3, **dadurch gekennzeichnet**, daß die zweite Überprüfung in einer Prüfung der eingelesenen Daten auf Computerviren besteht.

5. Verfahren nach mindestens einem der vorangehenden Ansprüche, **dadurch gekennzeichnet**, daß die in das Mikrocomputersystem (12) eingelesenen Daten durch Bearbeitung komprimiert, dekomprimiert, verschlüsselt oder entschlüsselt werden.

6. Verfahren nach mindestens einem der vorangehenden Ansprüche, **dadurch gekennzeichnet**, daß die von dem Mikrocomputersystem (12) eingelesenen Daten nach Prioritäten bearbeitet werden.

7. Verfahren nach mindestens einem der vorangehenden Ansprüche, **dadurch gekennzeichnet**, daß die vom Mikrocomputersystem (12) eingelesenen Daten im Rahmen einer Bearbeitung nach vorbestimmbaren zweiten Kriterien, insbesondere nach Absender, Größe, Prioritätsinformation, Betreff, Kopie/Original, gefiltert und/oder sortiert werden.

8. Verfahren nach mindestens einem der vorangehenden Ansprüche, **dadurch gekennzeichnet**, daß ein Zugang von der Datenleitung (20) durch das Mikrocomputersystem (12) hindurch auf das unmittelbar zugeordnete zweite Endgerät (2) unmöglich wird, so daß keine durchgehende Datenübertragung oder ein Zugriff auf das zweite Endgerät möglich ist.

9. Verfahren nach mindestens einem der vorangehenden Ansprüche, **dadurch gekennzeichnet**, daß die vom ersten Endgerät (1) ausgehenden Daten mit einem Namen und einer Telefonnummer als Adressenangabe für das dem Endgerät (2) unmittelbar zugeordnete Mikrocomputersystem (12) versehen werden.

10. Verfahren nach mindestens einem der vorangehenden Ansprüche, **dadurch gekennzeichnet**, daß das Mikrocomputersystem (12) beim Empfang von Daten automatisch Meldungen, insbesondere Empfangsbestätigungen oder Antworten auf elektronische Post, versendet.

11. Verfahren nach mindestens einem der vorangehenden Ansprüche, **dadurch gekennzeichnet**, daß im Mikrocomputersystem (12) gespeicherte Daten über die Datenleitung (20) mittels einer Fernbedienung bearbeitet, insbesondere weitergeleitet werden, und/oder die Bearbeitungsweise des Mikrocomputersystems (12) mittels der Fernbedienung verändert wird.

12. Verfahren nach Anspruch 11 , **dadurch gekennzeichnet**, daß bei einer Fernbearbeitung der im Mikrocomputersystem (12) gespeicherten Daten nur ein vorbestimmbarer Teil der gespeicherten Information bearbeitet wird.

13. Verfahren nach Anspruch 11 oder 12, **dadurch gekennzeichnet**, daß die eingelesenen Daten und/oder die Bearbeitungsweise des Mikrocomputersystems (12) nur nach einer Sicherheitsüberprüfung mit einer Fernbedienung beartbeitbar bzw. veränderbar sind.

14. Verfahren nach mindestens einem der vorangehenden Ansprüche, **dadurch gekennzeichnet**, daß vom Mikrocomputersystem (12) das Eingehen von Absenderinformationen vorbestimmbarer Absender registriert wird, anschließend automatisch ein Rückruf an den Absender veranlaßt wird, und erst nach Überprüfung der Absenderangabe die Daten an das Mikrocomputersystem (12) übertragen werden.

15. Verfahren nach mindestens einem der vorangehenden Ansprüche, **dadurch gekennzeichnet**, daß in das Mikrocomputersystem (12) eingelesene Daten durch eine Anzeige und/oder einen akustischen Signalgeber des Mikrocomputersystems (12) angezeigt werden.

16. Mikrocomputersystem (11, 12) zur Durchführung des Verfahrens nach Anspruch 1, mit mindestens einer ersten Schnittstelle (50) zur unmittelbaren Verbindung mit einem Endgerät (1, 2), mindestens einer zweiten Schnittstelle (51) zur Verbindung mit einer Datenleitung (20), mindestens einem Prozessorsystem (90) zur Steuerung der Funktion des Mikrocomputersystems (11, 12), mindestens einem Speicherelement (80) zum Speichern der übertragenen Daten, sowie für ein Betriebssystem und für eine Betriebssoftware und eine Anzeige und/oder einem akustischen Signalgeber für die empfangenen, gesendeten und/oder gespeicherten Informationen,
**gekennzeichnet durch**
a) Überprüfungsmittel, welche eingehende Daten vor einer Bearbeitung und/oder Speicherung im Mikrocomputersystem (11,12) nach vorbestimmbaren ersten Kriterien einer ersten Überprüfung unterziehen, und einem
b) Unterbrechungsmittel, welches die Verbindung zwischen der Datenleitung (20) und dem Mikrocomputersystem (11, 12) automatisch unterbricht, und
c) Bearbeitungsmittel, welche nur in das Mikrocomputersystem (11, 12) eingelesene Daten einer Bearbeitung nach vorbestimmbaren Bearbeitungsweisen und/oder zweiten vorbestimmbaren Kriterien unterziehen, wobei ein direkter Zugang von der Datenleitung (20) durch das Mikrocomputersystem (11, 12) hindurch auf das unmittelbar zugeordnete Endgerät (11, 12) unmöglich ist.

17. Mikrocomputersystem (11, 12) nach Anspruch 16, **gekennzeichnet durch** Überprüfungsmittel zur Ablehnung oder Akzeptierung eingehender Daten anhand der Absenderadresse.

18. Mikrocomputersystem (11, 12) nach Anspruch 16 oder 17, **gekennzeichnet durch** Bearbeitungsmittel für die eingelesenen Daten zur Überprüfung auf Computerviren.

19. Mikrocomputersystem (11, 12) nach mindestens einem der Ansprüche 16 bis 18, **gekennzeichnet durch** Bearbeitungsmittel zur Bearbeitung eingelesener Daten, insbesondere der Sortierung, Filterung, Kompression und / oder Verschlüsselung der Daten.

20. Mikrocomputersystem (11, 12) nach mindestens einem der Ansprüche 16 bis 19, **gekennzeichnet durch** Bearbeitungsmittel zur Fernbearbeitung von im Microcomputersystem (11, 12) gespeicherter Daten und/oder zur Fernbedienung der Bearbeitungsweise des Mikrocomputersystems (11, 12).

21. Mikrocomputersystem (11, 12) nach mindestens einem der Ansprüche 16 bis 20, **gekennzeichnet durch** Mittel, die automatisch vorbestimmbare Meldungen, insbesondere Empfangsbestätigungen, Übertragungsprotokolle oder Antworten auf elektronische Post, über die Datenleitung (20) senden.

22. Mikrocomputersystem (11, 12) nach mindestens einem der Ansprüche 16 bis 21 , **gekennzeichnet durch** Konvertierungsmittel für verschiedene Übertragungsprotokolle und Datenformate, insbesondere für Fax-, Sprach- und/oder Bilddaten.

23. Mikrocomputersystem (11, 12) nach mindestens einem der Ansprüche 16 bis 21, **gekennzeichnet durch** Mittel, mit denen von dem ersten Endgerät (1) ausgehende Daten mit einem Namen und einer Telefonnummer als Adressenangabe für das zweite Endgerät (2) versehbar sind.

## Claims

1. Method for the automatic and direct data transfer between a first end appliance (1) as sender and a second end appliance (2) as receiver, more particularly for the transfer of electronic mail, through a data line (20) wherein the data transfer is carried out through a micro computer system (12) directly associated with the second end appliance wherein the micro computer system (12) receives, sends, stores or processes data independently of the operating state of the associated second end appliance (2), characterised in that
a) the data coming into the micro computer system (12) is subjected to a first check according to predeterminable first criteria prior to processing and/or storing;
b) the data is only entered into the micro computer system (12) after a positive result to the first check;
c) the connection between the data line (20) and micro computer system (12) is automatically interrupted after the incoming data has been fed in;
d) the input data is only then processed in the micro computer system (12) according to predeterminable processing modes and/or second predeterminable criteria, and then
e) the data is transferred to the second end appliance (2) associated with the micro computer system (12).

2. Method according to claim 1 characterised in that when checking the data arriving at the micro computer system (12) data from predeterminable senders are either refused or accepted depending on the sender address.

3. Method according to claim 1 or 2 characterised in that data which has been fed in is subjected to a second check according to second predeterminable criteria and only after a positive result to the second check is the data passed onto the second end appliance (2).

4. Method according to claim 3 characterised in that the second check consists in checking the input data for computer viruses.

5. Method according to at least one of the preceding claims, characterised in that the data which has been fed into the micro computer system (12) is compressed, decompressed, coded or decoded by processing.

6. Method according to at least one of the preceding claims characterised in that the data which has been read by the micro computer system is processed according to priority.

7. Method according to at least one of the preceding claims characterised in that the data which has been read by the micro computer system (12) is filtered and/or sorted within the scope of processing according to predeterminable second criteria, more particularly according to sender, size, priority information, reference, copy/original.

8. Method according to at least one of the preceding claims characterised in that access from the data line (20) through the micro computer system (12) to the second end appliance (2) directly associated therewith is impossible so that no continuous data transfer or access to the second end appliance is possible.

9. Method according to at least one of the preceding claims characterised in that the data coming from the first end appliance (1) is provided with a name and telephone number as address details for the micro computer system directly associated with the end appliance (2).

10. Method according to at least one of the preceding claims characterised in that the micro computer system (12) on receipt of data automatically sends notifications, more particularly certificates of receipt or answers to electronic mail.

11. Method according to at least one of the preceding claims characterised in that data stored in the micro computer system (12) is processed, more particularly redirected, through the data line (20) by means of remote control and/or the processing mode of the micro computer system (12) is changed by means of remote control.

12. Method according to claim 11 characterised in that with remote processing of the data stored in the micro computer system (12) only a predeterminable part of the stored data is processed.

13. Method according to claim 11 or 12 characterised in that the input data and/or the processing mode of the micro computer system (12) can only be processed or changed respectively through remote control operation after security checks.

14. Method according to at least one of the preceding claims, characterised in that the input of sender data from a predeterminable sender is registered by the micro computer system (12) and then a call back is automatically returned to the sender and only after a check on the sender details is the data transferred to the micro computer system (12).

15. Method according to at least one of the preceding claims, characterised in that data fed into the micro computer system (12) is indicated by a display and/or an acoustic signal transmitter of the micro computer system (12).

16. Micro computer system (11,12) for carrying out the method according to claim 1, with at least a first interface (50) for the direct connection with an end appliance (1,2), at least a second interface (51) for connection with a data line (20), at least a processor system (90) for controlling the function of the micro computer system (11,12), at least a memory element (80) for storing the transferred data, as well as for an operating system and for an operating software and a display and/or acoustic signal transmitter for the received, sent and/or stored data, characterised by
a) check means which subject incoming data prior to processing and/or storage in the micro computer system (11,12) to a first check according to predeterminable first criteria, and
b) interruption means which automatically break the connection between the data line (20) and the micro computer system (11,12) and
c) processing means which only subject data fed into the micro computer system (11,12) to processing according to predeterminable processing modes and/or second predeterminable criteria wherein a direct access from the data line (20) through the micro computer system (11,12) to the end appliance (11,12) directly associated with same is impossible.

17. Micro computer system (11,12) according to claim 16 characterised by checking means for refusing or accepting incoming data in dependence on the sender address.

18. Micro computer system (11,12) according to claim 16 or 17 characterised by processing means for checking the input data for computer viruses.

19. Micro computer system (11,12) according to at least one of claims 16 to 18 characterised by processing means for processing input data, more particularly sorting, filtering, compression and/or decoding of data.

20. Micro computer system (11,12) according to at least one of claims 16 to 19 characterised by processing means for remote control processing of data stored in the micro computer system (11,12) and/or for remote control operation of the processing mode of the micro computer system (11,12).

21. Micro computer system (11,12) according to at least one of claims 16 to 20 characterised by means which send automatically predeterminable notifications, more particularly certificates of receipt, transmission protocols or answers to electronic mail through the data line (20) .

22. Micro computer system (11,12) according to at least one of claims 16 to 21 characterised by conversion means for different transmission protocols and data formats, more particularly for fax, language and/or image data.

23. Micro computer system (11,12) according to at least one of claims 16 to 21 characterised by means through which data coming from the first end appliance (1) is provided with a name and a telephone number as address details for the second end appliance (2).

## Revendications

1. Procédé pour la transmission automatique et directe de données entre un premier appareil d'extrémité 1 comme émetteur et un second appareil d'extrémité 2 comme récepteur, en particulier pour la transmission de courrier électronique, par l'intermédiaire d'une ligne de données (20), procédé dans lequel la transmission des données s'effectue par l'intermédiaire d'un système de micro-ordinateur (12) affecté directement au deuxième appareil d'extrémité, le système de micro-ordinateur (12) recevant, émettant, mémorisant ou traitant les données, indépendamment de l'état de service du deuxième appareil d'extrémité affecté (2),
caractérisé en ce que
a) les données arrivant au système de micro-ordinateur (12) sont soumises à une première vérification selon des premiers critères prédéterminables avant un traitement et/ou mémorisation,
b) les données ne sont entrées dans le système de micro-ordinateur (12) qu'après un résultat positif de la première vérification,
c) la liaison entre la ligne de données (20) et le système de micro-ordinateur (12) est interrompue automatiquement après l'entrée des données qui arrivent,
d) les données entrées dans le système de micro-ordinateur (12) ne sont alors traitées que selon des modes de traitement prédéterminables et/ou des deuxièmes critères prédéterminables, et consécutivement
e) les données sont transmises au second appareil d'extrémité (2) affecté au système de micro-ordinateur (12).

2. Procédé selon la revendication 1, caractérisé en ce que, lors de la vérification des données qui arrivent au système de micro-ordinateur (12), les données d'émetteur prédéterminables sont soit refusées, soit acceptées sur la base de l'adresse de l'émetteur.

3. Procédé selon la revendication 1 ou 2, caractérisé en ce que les données entrées sont soumises à une seconde vérification selon les seconds critères prédéterminables et ne sont transmises qu'après un résultat positif de la deuxième vérification au second appareil d'extrémité.

4. Procédé selon la revendication 3, caractérisé en ce que la seconde vérification consiste en un contrôle des données entrées pour détecter des virus ordinateur.

5. Procédé selon au moins l'une des revendications précédentes, caractérisé en ce que les données entrées dans le système de micro-ordinateur (12) sont comprimées, décomprimées, codées ou décodées par traitement.

6. Procédé selon au moins l'une des revendications précédentes, caractérisé en ce que les données entrées par le système de micro-ordinateur (12) sont traitées selon les priorités.

7. Procédé selon au moins l'une des revendications précédentes, caractérisé en ce que les données entrées par le système de micro-ordinateur (12) sont filtrées et/ou triées dans le cadre d'un traitement selon des seconds critères prédéterminables, en particulier en fonction de l'émetteur, de la grandeur, de l'information de priorité, de l'objet, de la copie/original.

8. Procédé selon au moins l'une des revendications précédentes, caractérisé en ce qu'un accès de la ligne de données (20) par le système de micro-ordinateur (22) jusqu'au deuxième appareil d'extrémité (2) directement affecté est impossible, de sorte qu'aucune transmission de données traversante ou d'intervention sur le second appareil d'extrémité n'est possible.

9. Procédé selon au moins l'une des revendications précédentes, caractérisé en ce que les données sortant du premier appareil d'extrémité (1) sont munies d'un nom et d'un numéro de téléphone comme indication d'adresse pour le système de micro-ordinateur (12) affecté directement à l'appareil d'extrémité (2).

10. Procédé selon au moins l'une des revendications précédentes, caractérisé en ce que le système de micro-ordinateur (12), à la réception de données, envoie automatiquement des informations, en particulier des accusés de réception ou des réponses à un courrier électronique.

11. Procédé selon au moins l'une des revendications précédentes, caractérisé en ce que les données mémorisées dans le système de micro-ordinateur (12) sont traitées via la ligne de données (20) au moyen d'une télécommande, et en particulier sont retransmises, et/ou le mode de traitement du système de micro-ordinateur (12) est modifié au moyen de la télécommande.

12. Procédé selon la revendication 11, caractérisé en ce que lors d'un télétraitement des données mémorisées dans le système de micro-ordinateur (12), seule une partie prédéterminable de l'information mémorisée est traitée.

13. Procédé selon la revendication 11 ou 12, caractérisé en ce que les données entrées et/ou le mode de traitement du système de micro-ordinateur (12) ne peuvent être traités ou modifiés qu'après une vérification de sécurité avec une télécommande.

14. Procédé selon au moins l'une des revendications précédentes, caractérisé en ce que l'entrée des informations d'expéditeur provenant de l'expéditeur prédéterminable est enregistrée par le système de micro-ordinateur (12), et consécutivement un rappel est automatiquement déclenché à destination de l'émetteur, et ce n'est qu'après vérification de l'indication d'émetteur que les données sont transmises au système de micro-ordinateur (12).

15. Procédé selon au moins l'une des revendications précédentes, caractérisé en ce que les données entrées dans le système de micro-ordinateur (12) sont affichées au moyen d'un affichage et/ou d'un émetteur de chimioacoustique du système de micro-ordinateur (12).

16. Système de micro-ordinateur (11, 12) pour la réalisation du procédé selon la revendication 1, avec au moins une première interface (50) pour la liaison directe avec un appareil d'extrémité (1, 2), au moins une seconde interface (51) pour la liaison avec une ligne de données (20), au moins un système de processeur (90) pour la commande de la fonction du système de micro-ordinateur (11, 12), au moins un élément de mémoire (80) pour mémoriser les données transmises, ainsi que pour un système d'exploitation et pour un logiciel d'exploitation et un affichage et/ou un émetteur de signaux acoustiques pour les informations reçues, envoyées et/ou mémorisées,
caractérisé par
a) des moyens de vérification qui soumettent les données entrées avant un traitement et/ou la mémorisation dans le système de micro-ordinateur (11, 12) selon des premiers critères prédéterminables à une première vérification, et
b) un moyen d'interruption qui interrompt automatiquement la liaison entre la ligne de données (20) et le système de micro-ordinateur (11, 12), et
c) des moyens de traitement qui ne soumettent que les données entrées dans le système de micro-ordinateur (11, 12) à un traitement selon des modes de fonctionnement prédéterminables et/ou selon des seconds critères prédéterminables, un accès direct depuis la ligne de données (20) par le système de micro-ordinateur (11, 12) jusqu'à l'appareil d'extrémité immédiatement affecté (11, 12) étant impossible.

17. Système de micro-ordinateur (11, 12) selon la revendication 16, caractérisé par des moyens de vérification destinés à refuser ou accepter les données d'arrivée sur la base de l'adresse de l'émetteur.

18. Système de micro-ordinateur (11, 12) selon la revendication 16 ou 17, caractérisé par des moyens de traitement pour les données entrées destinées à vérifier la présence de virus ordinateur.

19. Système de micro-ordinateur (11, 12) selon au moins l'une des revendications 16 à 18, caractérisé par des moyens de traitement pour le traitement des données entrées, en particulier le tri, le filtrage, la compression et/ou le codage des données.

20. Système de micro-ordinateur (11, 12) selon au moins l'une des revendications 16 à 19, caractérisé par les moyens de traitement pour le télétraitement de données mémorisées dans le système de micro-ordinateur (11, 12) et/ou pour la télécommande du mode de traitement du système de micro-ordinateur (11, 12).

21. Système de micro-ordinateur (11, 12) selon au moins l'une des revendications 16 à 20, caractérisé par des moyens qui envoient automatiquement des informations prédéterminables, en particulier des accusés de réception, des protocoles de transmission ou des réponses à un courrier électronique via la ligne de données (20).

22. Système de micro-ordinateur (11, 12) selon au moins l'une des revendications 16 à 21, caractérisé par des moyens de conversion pour différents protocoles de transmission et de format de données, en particulier pour des données de télécopie, des données vocales et/ou d'images.

23. Système de micro-ordinateur (11, 12) selon au moins l'une des revendications 16 à 21, caractérisé par des moyens avec lesquels les données sortant du premier appareil d'extrémité (1) peuvent être dotées d'un nom et d'un numéro de téléphone comme indication d'adresse pour le second appareil d'extrémité (2).
